# FASCICULE DE BREVET EUROPEEN

(11) **EP 1 608 498 B1**
(45) Date de publication et mention de la délivrance du brevet: **17.11.2010**
(21) Numéro de dépôt: 04742378.5
(22) Date de dépôt: 26.03.2004
(51) Int. Cl.: B29C 49/48, B29C 49/22, B29C 49/04, B65D 83/00, B05B 11/00

(54) **PROCEDE DE REALISATION D'UNE REPRISE D'AIR DANS UN RECIPIENT MULTIPAROIS**
VERFAHREN ZUR HERSTELLUNG EINES ABLUFTSYSTEMS IN EINEM BEHÄLTER MIT MEHREREN WÄNDEN
METHOD FOR CARRYING OUT VENTILATION IN A MULTI-WALLED CONTAINER

(30) Priorité: 02.04.2003 FR 0304265
(43) Date de publication de la demande: 28.12.2005
(73) Titulaire: Promens SA, 01115 Oyonnax Cédex (FR)
(72) Inventeur: MOREL, Sabrina, F-38530 Chapareillan (FR); HENNEMANN, Pascal, F-39360 Vaux les Saint Claude (FR); LAUTRE, Philippe, F-01100 Oyonnax (FR)
(74) Mandataire: Bentz, Jean-Paul
(86) Numéro de dépôt international: PCT/FR2004/000774
(87) Numéro de publication internationale: WO 2004/089602

(56) Documents cités:
- EP-A- 0 182 094
- EP-A- 1 043 235
- EP-A- 1 199 252
- DE-U1- 9 219 211
- US-A1- 2001 032 853

## Description

La présente invention concerne un procédé de réalisation d'une reprise d'air dans un récipient multiparois notamment destiné à contenir un produit liquide ou pâteux, comme on les rencontre souvent dans l'industrie pharmaceutique ou cosmétologique.

Ces récipients sont du type constitués par un boîtier externe rigide, à l'intérieur duquel est disposé une poche souple destinée à contenir le produit et en liaison avec un organe de prélèvement sans reprise d'air, généralement une pompe.

Un tel récipient est obtenu dans un moule par un procédé de coextrusion soufflage d'une paraison formée d'une couche principale extérieure en matière plastique, relativement rigide et une couche secondaire interne, en matière plastique relativement souple.

Ces couches ne présentent aucune adhésion entre elles, de sorte à se délaminer sans difficulté, après soudage par pincement d'une zone de la couche interne, puis suppression du résidu de paraison appelé carotte ainsi formé lors de la mise en oeuvre du procédé de coextrusion soufflage, et enfin création d'une reprise d'air entre la couche souple et la couche rigide de ladite paraison.

En fait, lors de l'actionnement de l'organe de prélèvement dans la poche intérieure souple, il se produit un collapsage de cette poche tout en laissant le boîtier extérieur rigide intact.

Dans les récipients connus de ce type, il y a un nombre de pièces élevées : la poche formée par la couche intérieure souple, le boîtier extérieur rigide, l'organe de prélèvement et une pièce d'interface entre les trois composants.

Une pièce d'interface doit alors être étudiée pour permettre un bon assemblage entre l'organe de prélèvement et la poche formée par la couche fine interne afin de donner une assez bonne rigidité à l'embout de ladite poche et permettre un serrage et une étanchéité nécessaire pour qu'il n'y ait pas de défaut d'étanchéité au niveau de l'embout.

Un assemblage ainsi que des soudures entre la poche et la pièce interface intermédiaire sont donc nécessaires, ce qui induit un coût supplémentaire.

Il est également connu de créer un organe de prélèvement n'autorisant pas la reprise d'air de la poche formée par la couche fine interne.

Il est également connu de créer un moyen de reprise d'air entre le boîtier extérieur rigide et la poche formée par la couche fine interne.

Lors du prélèvement et du collapsage de la poche formée par la couche fine interne, une dépression est créée entre le boîtier extérieur rigide et la poche formée par la couche fine interne. Cette dépression risque de provoquer le collapsage du boîtier extérieur rigide. Pour remédier à ce problème, il est connu de créer un trou soit dans la pièce d'interface, soit dans le boîtier extérieur rigide afin que l'air extérieur passe par ce trou et compense la dépression.

Il est aussi connu, par le brevet DE 92 19 211, de créer les deux couches en question, c'est à dire, le boîtier extérieur rigide et la poche intérieure souple en une seule opération par extrusion multicouches, mais non délaminables.

Pour y remédier, ce document décrit un procédé par lequel un additif lubrifiant est introduit dans la matière. Mais la reprise d'air et le délaminage sont obtenus en réalisant des trous, ce qui constitue une opération mécanique supplémentaire.

Il est aussi connu de créer deux couches qui ne se collent pas l'une à l'autre. Les couches doivent avoir les propriétés suivantes :
- couche extérieure rigide,
- couche intérieure souple déformable et inerte par rapport au contenu,
- utilisation d'un matériau intermédiaire qui assure la délamination,
- le cas échéant : une couche de matériau barrière couplée à la couche intérieure,
- en option : des couches de liant ou d'adhésif pour coller les couches qui ne doivent pas se délaminer.

Egalement, il est connu de pratiquer un trou qui perce le boîtier extérieur rigide sans percer la poche formée par la couche fine interne par perçage ou fraisage, mais il y a alors un risque de perçage et/ou de fragilisation de la poche formée par la couche fine interne. Il est donc nécessaire de contrôler toutes les pièces pour vérifier leur bon état. Dans le cas d'un perçage pas assez profond, la reprise d'air ne fonctionne pas.

Dans le cas d'un perçage trop profond, la couche interne peut alors être percée, ou du moins être fragilisée au niveau de la zone de perçage.

Il est également connu d'initier la délamination pour faciliter l'utilisation par la suite mais plusieurs inconvénients apparaissent, à savoir : variation du volume de la poche formée par la couche fine interne ; zone de trou d'air qui change la contenance ; reprise complexe (aspirer la poche formée par la couche fine interne puis la re-souffler), baisse de l'esthétisme du fait du froissement de la zone de la poche formée par la couche fine interne délaminée.

L'art antérieur est également constitué par le brevet américain US 2001/0032853 et le brevet EP 0 182 094. Mais dans l'un comme dans l'autre des cas, le délaminage des couches en présence nécessite une action mécanique pour initier le décollement des matières les constituant. Le trou de reprise d'air nécessite la réalisation d'une déformation permanente ou non permanente par des moyens mécaniques.

La présente invention a pour but de remédier à ces inconvénients et concerne à cet effet, un procédé de réalisation d'une reprise d' air tel que défini à la revendication 1.

Cette description donnée à titre d'exemple non limitatif, fera mieux comprendre comment l'invention peut être réalisée en référence aux dessins annexés sur lesquels :

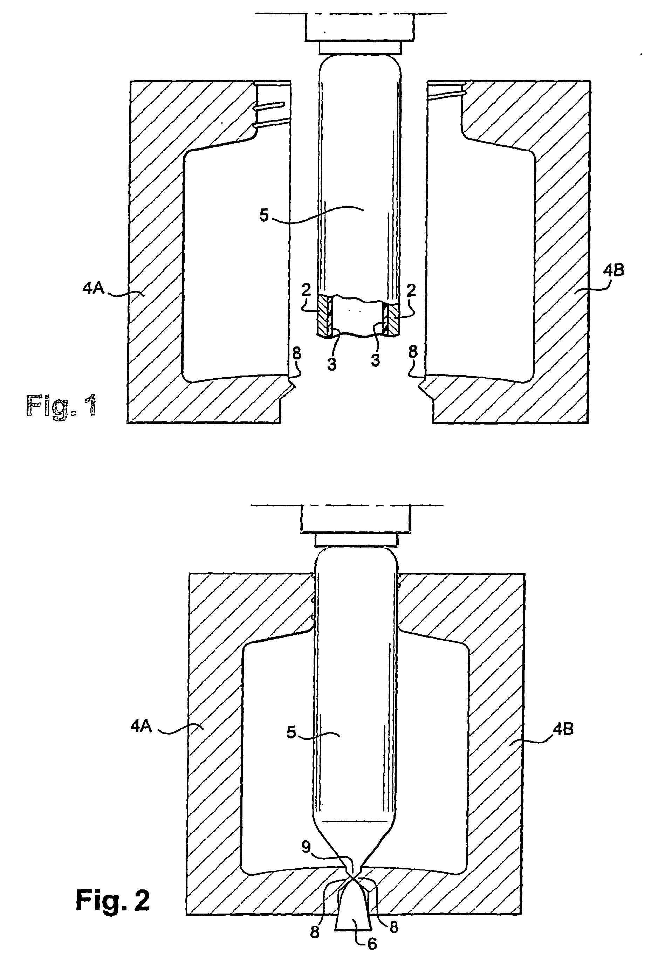

La figure 1 représente une vue en coupe d'un moule en deux parties et d'une paraison, avant fermeture du moule.
La figure 2 représente un moule selon la figure 1 après fermeture de ses deux demi-coques et pincement de la paraison à sa partie inférieure.
La figure 3 représente un moule selon la figure 2 après une opération de coextrusion soufflage de la paraison dans le moule.
La figure 4 représente une vue en coupe selon les figures précédentes d'un contenant extrait du moule après décarottage, selon les figures 1 et 3.
Les figures 5 à 7 représentent les phases successives de sectionnement de l'excroissance du contenant, obtenue par moulage dans la partie inférieure et de délaminage de l'excroissance par traction verticale par l'intermédiaire d'une tenaille.
La figure 8 est une vue à échelle agrandie de la zone A de la figure 7.
Les figures 9 et 10 représentent des phases successives d'initiation d'une délamination selon un second exemple de réalisation.
Les figures 11 et 12 représentent les phases successives d'initiation d'une délamination selon un troisième exemple de réalisation.
La figure 13 est une vue en perspective montrant une réalisation particulière des demi-coques du moule en vue de créer des pincements longitudinaux de la paraison.
La figure 14 est une vue à échelle agrandie du détail B de la figure 13.
La figure 15 est une vue en coupe transversale d'une paraison dont la poche souple comporte des nervures longitudinales internes.

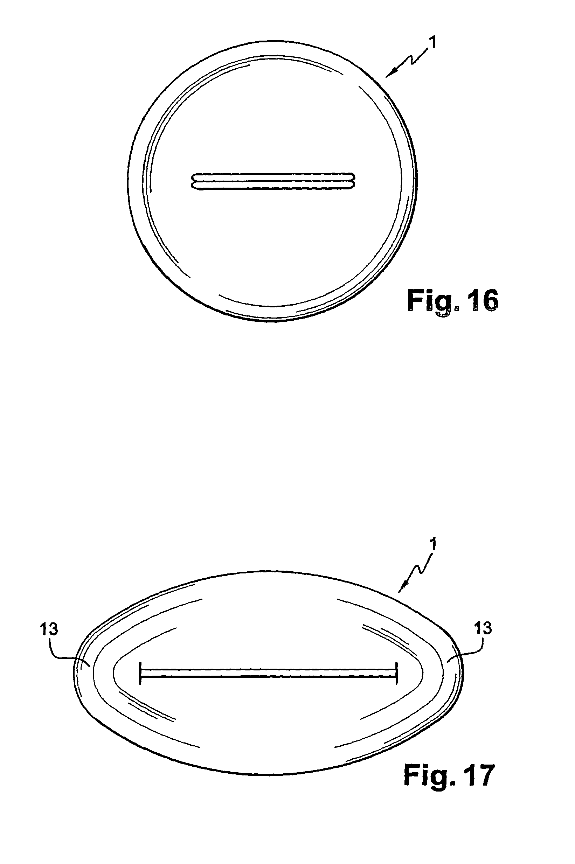

La figure 16 représente le fond externe d'un contenant circulaire.
La figure 17 est une vue du fond d'un contenant globalement ovale.

Le récipient multiparois est du type constitué par un boîtier externe rigide 2 à l'intérieur duquel est disposée une poche souple 3 destinée à contenir un produit et en liaison avec un organe de prélèvement sans reprise d'air (non représenté), un tel récipient étant obtenu dans un moule 4 par coextrusion soufflage d'une paraison 5 formée d'une couche principale extérieure en matière plastique relativement rigide destiné à constituer le boîtier 2 et une couche secondaire interne en matière plastique relativement souple destinée à constituer la poche 3, lesdites couches 2, 3 ne présentant aucune adhésion entre elles de sorte à se délaminer sans difficulté, après création d'une carotte dans une partie de la paraison lors de l'opération de coextrusion soufflage, puis suppression de la carotte 6 ainsi formée et enfin, création d'une reprise d'air 7 entre la couche souple 3 et la couche rigide 2 de la paraison 5.

Selon l'invention, la reprise d'air 7 est obtenue en ménageant dans le moule 4 dans au moins une zone de pincement de la paraison 5 une réservation 8 destinée à l'obtention d'une excroissance 9 de ladite paraison 5, la hauteur de celle-ci étant telle à permettre au niveau de son extrémité :
- une première opération de cisaillement au niveau de la carotte 6 formée lors de l'opération d'extrusion soufflage et ayant pour effet néfaste de souder entre elles par écrasement dans cette zone, d'une part les deux parois constituées de la couche interne 3 de la paraison et d'autre part les deux parois constituées de la couche externe 2 de la même paraison,
- une seconde opération de découpe de l'excroissance 9 par l'intermédiaire d'un outil coupant 10,
- une troisième opération successive ou simultanée à la seconde consistant à initier la délamination des couches 2, 3 entre elles par l'intermédiaire d'un moyen mécanique permettant d'exercer un effort axial F sur l'excroissance 9 ou dans une zone proche de celle-ci.

Un tel récipient est donc mis en oeuvre par coextrusion soufflage consistant à extruder la paraison qui va être pincée entre deux demi-coques d'un moule.

Une canne de soufflage s'appuie sur la partie supérieure du moule, ce qui permet de former l'embout du contenant par découpe de la paraison dépassant de la partie supérieure du moule.

Lors de cette découpe, une partie de la couche interne de la paraison vient se rabattre sur la partie haute du contenant formé, permettant un meilleur maintien et une meilleure étanchéité de la poche formée par la couche souple interne lors de la future installation de l'organe de prélèvement.

C'est ainsi que l'air soufflé à travers la canne de soufflage va obturer la paraison encore chaude afin que celle-ci se plaque sur les parois internes du moule pour donner la forme extérieure du récipient.

Les deux demi-coques constitutives du moule diffèrent des demi-coques d'un moule standard de coextrusion par le fait qu'est formée par exemple au fond du flacon une excroissance de paraison permettant de souder solidement sur une certaine hauteur la couche interne formant la poche souple tout en empêchant la soudure de la couche externe rigide sur elle-même, du fait de la présence de la couche interne entre les deux parois de la couche externe.

Comme dans le cas d'un procédé de réalisation d'un flacon par extrusion soufflage traditionnel, la paraison dépassant de la partie inférieure du moule est cisaillée par des couteaux intégrés aux demi-coques du moule, pour former une carotte, et la partie de la paraison dépassant de la partie supérieure du moule est cisaillée entre le col en haut du moule et la canne de soufflage pour également former une carotte.

L'opération suivante de décarottage consiste à retirer mécaniquement les carottes obtenues précédemment.

Afin d'effectuer le décarottage des résidus de paraison, que ce soit à la partie supérieure ou inférieure, encore accrochées au flacon, une pince ou bras ou ventouse ou tout système de transfert vient récupérer le contenant dans le moule pour l'insérer dans un masque ayant la forme du flacon.

L'opération de décarottage consiste à dissocier par un moyen mécanique les résidus de paraisons présents sur le récipient.

Les différentes étapes de ce procédé sont les suivantes :
- descente de la paraison (5) dans le moule (4)
- fermeture du moule (4) comportant une réservation (8), destiné à la réalisation d'une excroissance (9) de la paraison (5),
- une première opération de cisaillement au niveau de la carotte (6) formée lors de l'opération d'extrusion soufflage et ayant pour effet néfaste de souder entre elles par écrasement dans cette zone d'une part les deux parois constituées de la couche interne (3) de la paraison et d'autre part les deux parois constituées de la couche externe (2) de la même paraison,
- descente de la canne de soufflage (30) et découpe de l'embout du contenant (1),
- soufflage de la paraison (5) et refroidissement de celle-ci,
- remontée de la canne de soufflage (30),
- ouverture du moule (4),
- reprise du contenant (1) par des masques de reprise,
- une seconde opération de découpe de l'excroissance (9) par l'intermédiaire d'un outil coupant (10),
- une troisième opération successive ou simultanée à la seconde consistant à initier la délamination des couches (2, 3) entre elles par l'intermédiaire d'un moyen mécanique permettant d'exercer un effort axial sur l'excroissance (9) ou dans une zone proche de celle-ci.

Le contenant ainsi formé est achevé et prêt pour le conditionnement d'un produit liquide ou pâteux avec obturation de l'embout supérieur par un organe de prélèvement sans reprise d'air.

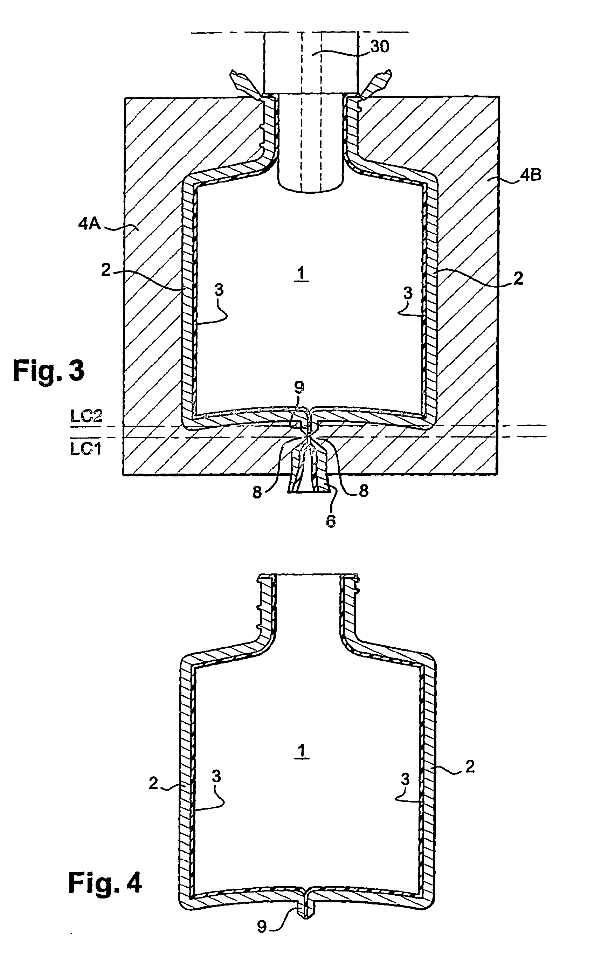

En fait, comme visible sur la figure 3, la première opération de cisaillement au niveau de la carotte 6 s'effectue par des couteaux 8 intégrés au moule 4.

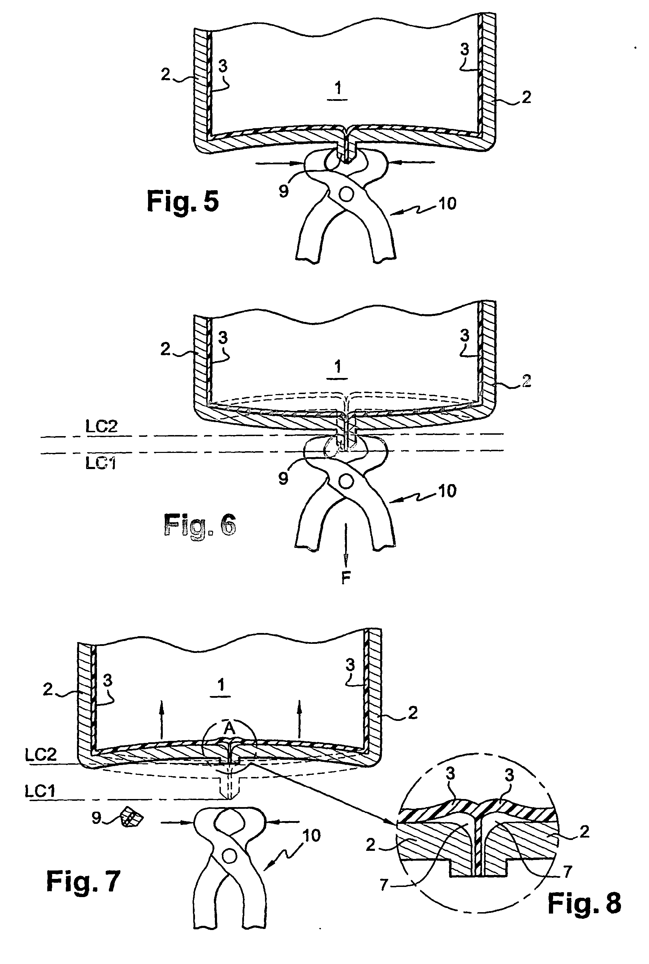

En ce qui concerne la seconde opération de cisaillement, comme visible sur les figures 5, 6, la seconde opération de découpe de l'excroissance 9 s'effectue par un outil coupant automatisé ou automatisable constitué par une tenaille 10.

Enfin, la troisième opération, figure 7, consiste à exercer un effort axial F sur l'excroissance 9 en vue d'initier la délamination des couches 2, 3 entre elles et s'effectue par l'intermédiaire d'un outil coupant automatisé ou automatisable constitué par une tenaille 10 en pinçant l'excroissance, la tirant dans le sens axial et en pratiquant ensuite la seconde opération de découpe.

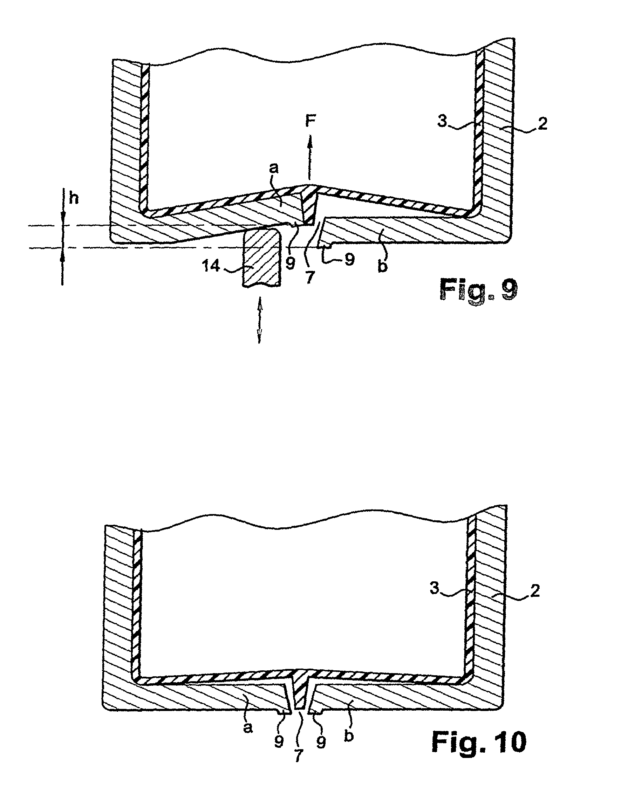

Selon une seconde variante, figures 9 et 10, la troisième opération consistant à exercer un effort axial F sur l'excroissance 9 en vue d'initier la délamination des couches 2, 3 entre elles, s'effectue par déformation d'une partie a de la zone limitrophe de l'excroissance 9 par l'intermédiaire d'un pion 14 localisé dans le moule 4 ou lors du décarottage, ledit pion 14 étant apte à provoquer une différence de hauteur h avec une autre partie b de la zone limitrophe de l'excroissance 9, de manière à dissocier la couche interne 3 de la couche externe 2 et créer une zone de reprise d'air 7 entre les couches internes et externes.

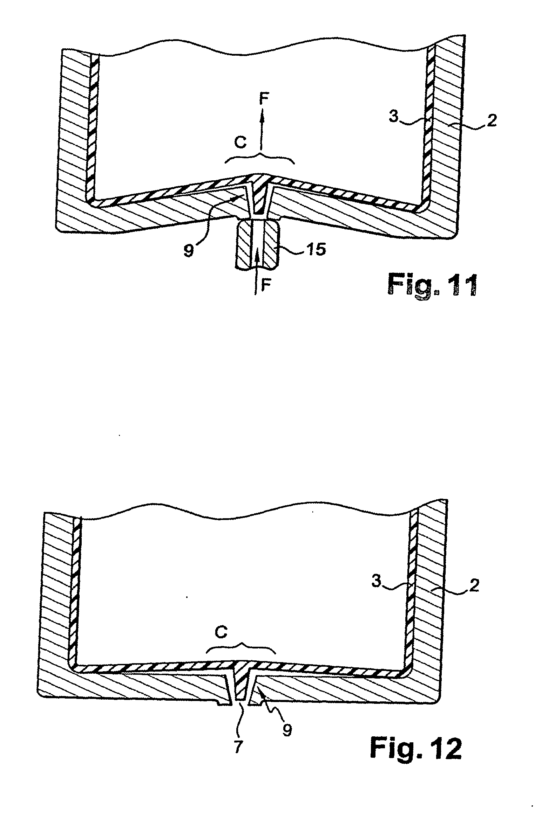

Selon une troisième variante, figures 11 et 12, la troisième opération consistant à exercer un effort axial F sur l'excroissance 9 en vue d'initier la délamination des couches 2, 3 entre elles s'effectue par déformation d'une partie c de la zone entourant l'excroissance 9 par l'intermédiaire d'une première canne de soufflage 15 tendant à écarter les deux parois 2, 3 en soufflant de l'air sous pression, s'infiltrant entre le boîtier externe 2 et la poche souple interne 3 pour délaminer sur une hauteur donnée, les deux parois 2, 3.

Selon ce dernier mode de réalisation, une seconde canne de soufflage (non représentée) vient successivement souffler au niveau de l'embout supérieur du récipient, de l'air sous pression pour vérifier l'étanchéité de la poche 3 et permettre de venir la replaquer contre le boîtier externe 2 pour qu'elle reprenne sa forme et sa contenance initiale.

Il est à noter que l'excroissance est réalisée dans la partie basse du récipient et/ou au niveau de la partie haute du récipient dans la zone d'un embout.

De manière à améliorer le délaminage, plus particulièrement dans la zone de l'excroissance 9 subissant un écrasement lors de la création de la carotte 6, des agents sont ajoutés dans l'une et/ou l'autre matière constitutive du contenant afin de faciliter le décollement des deux couches 2, 3 formées par la paroi interne souple et la paroi externe rigide ou de ne pas permettre leur soudure lors de leur écrasement.

Les agents utilisés pour améliorer la non soudure au niveau de l'excroissance 9 sont des agents lubrifiants, dispersants et glissants (érucamide, composés siliconés et stéarates).

Préférentiellement, la couche externe 2 formant le boîtier rigide et la couche interne 3 formant la poche souple sont constitués respectivement en polypropylène et en polyéthylène, non adhérents entre eux.

Avantageusement, la couche externe 2 de la paraison 5 représente 80% ± 10% de l'épaisseur totale de la paraison 5 et la couche interne 3 20% ± 10%, de manière à rendre la première rigide et la seconde collapsable par rapport à celle-ci.

La définition de l'excroissance 9 et conséquemment de la réservation 8 correspondante du moule 4, en termes de longueur, largeur, hauteur et profil est effectuée en fonction des matières utilisées et de la forme à obtenir.

Selon une autre caractéristique de l'invention, le moule 4 constitué de deux demi-coques 4A, 4B comporte dans son plan de joint des extensions longitudinales 11 réalisées sur une hauteur prédéterminée, de manière à permettre un pincement de la couche interne souple 3 dans la couche externe rigide 2, empêchant la délamination de la première par rapport à la seconde dans cette zone et contraindre ainsi, lors de l'usage du contenant 1, une délamination de la poche souple 3 par rapport au boîtier rigide 2 dans un sens perpendiculaire audit plan de joint.

Ces cannelures peuvent varier en nombre et en positionnement afin d'optimiser le collapsage de la poche 3 formée par la couche souple interne.

Selon une autre caractéristique de l'invention, la paraison 5 comporte au moins une nervure 12 réalisée longitudinalement sur la périphérie interne de la poche souple 3, de manière à faciliter la vidange de celle-ci en la contraignant ainsi à se rétracter autour d'un axe central correspondant à celui de l'organe de prélèvement (non représenté) et éventuellement de son tube plongeur (non représenté) et conséquemment à se collapser suivant des zones de pliures préférentielles et faciliter ainsi le vidage de la poche 3 en utilisation.

Selon un exemple de réalisation non limitatif, l'organe de prélèvement est constitué par une pompe sans reprise d'air (non représentée) comportant un tube plongeur la prolongeant vers l'intérieur de la poche 3 et de longueur telle que le prélèvement de produit ne soit pas gêné par le collapsage de ladite poche 3, permettant ainsi une restitution maximale du produit contenu.

Comme le montre bien les figures, le fond du moule 4 a une forme optimisée de manière à favoriser la continuation de la délamination initiée entre la couche rigide 2 et la couche souple 3 lors de la création de la reprise d'air 7.

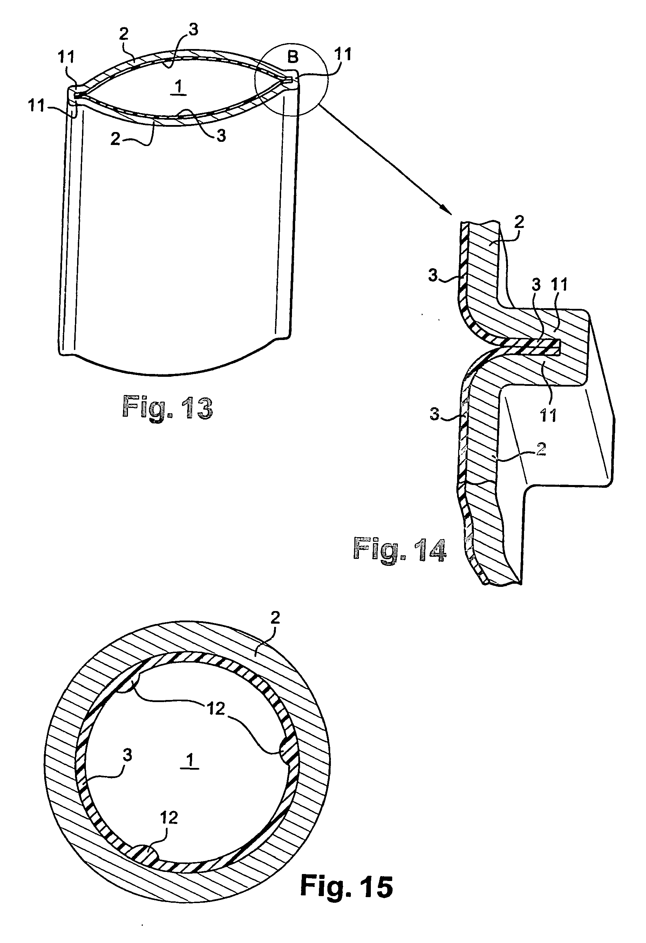

Selon une caractéristique de l'invention représentée à la figure 13, le fond du moule 4 est bombé vers l'extérieur et comprend au moins deux appendices diamétralement opposés destinés à former des plots d'appui 13 du contenant 1, en vue d'assurer la stabilité de celui-ci, malgré son fond bombé.

Ces plots d'appui sont localisés sur le fond du récipient de façon à ne pas gêner l'initiation de la délamination.

Selon une variante de réalisation, chaque couche de la paraison 5, rigide et/ou souple est constituée par plusieurs strates formant des sous-ensembles, chacun de ceux-ci étant délaminable par rapport à l'autre.

Selon une autre caractéristique de l'invention, la matière constitutive du boîtier rigide externe est rendue poreuse par l'intermédiaire de charges ou d'additifs ajoutés à la matière, de manière à améliorer la continuation de la délamination sur les parois du récipient en permettant à l'air extérieur de s'insérer plus facilement entre les deux couches constituant le récipient.

## Revendications

1. Procédé de réalisation d'une reprise d'air dans un récipient (1) multiparois, du type constitué par un boîtier externe rigide (2) à l'intérieur duquel est disposée une poche souple (3) destinée à contenir un produit et en liaison avec un organe de prélèvement sans reprise d'air, un tel récipient (1) étant obtenu dans un moule (4) par coextrusion soufflage d'une paraison (5) formée d'une couche principale extérieure en matière plastique relativement rigide destinée à constituer le boîtier (2) et une couche secondaire interne en matière plastique relativement souple destinée à constituer la poche (3), lesdites couches (2, 3) ne présentant aucune adhésion entre elles de sorte à se délaminer sans difficulté, après création d'une carotte (6) dans une partie de la paraison (5) lors de l'opération de coextrusion soufflage, puis suppression de la carotte (6) ainsi formée et enfin, création d'une reprise d'air (7) entre la couche souple (3) et la couche rigide (2) de la paraison (5), la reprise d'air (7) étant obtenue en ménageant dans le moule (4), dans au moins une zone de pincement de la paraison (5), une réservation (8) destinée à l'obtention d'une excroissance (9) de ladite paraison (5), la hauteur de celle-ci étant telle à permettre au niveau de son extrémité une première opération de cisaillement au niveau de la carotte (6) ayant pour effet néfaste de souder par écrasement dans cette zone, les deux parois de la couche externe (2) aux deux parois de la couche interne (3), une seconde opération de découpe de l'excroissance (9) par l'intermédiaire d'un outil coupant (10), après ouverture du moule (4) et reprise du récipient (1) par des masques de reprise, et une troisième opération successive ou simultanée à la seconde consistant à délaminer les couches (2, 3) entre elles par l'intermédiare d'un moyen mécanique, **caractérisé en ce que** la délamination pour réaliser la reprise d'air est obtenue uniquement par l'exercice d'un effort axial (F) sur l'excroissance (9) ou dans une zone proche de celle-ci.

2. Procédé selon la revendication 1, **caractérisé en ce que** la première opération de cisaillement s'effectue par des couteaux (8) intégrés au moule (4).

3. Procédé selon l'une des revendications 1 ou 2, **caractérisé en ce que** la seconde opération de découpe s'effectue par un outil coupant automatisé ou automatisable constitué par une tenaille (10).

4. Procédé selon l'une des revendications 1 à 3, **caractérisé en ce que** la troisième opération d'initiation de la délamination s'effectue par l'intermédiaire d'un outil coupant automatisé ou automatisable constitué par une tenaille (10) en pinçant l'excroissance (9), la tirant dans le sens axial et en pratiquant ensuite la seconde opération de découpe.

5. Procédé selon l'une des revendications 1 à 3, **caractérisé en ce que** la troisième opération d'initiation de la délamination s'effectue par déformation d'une partie (a) de la zone limitrophe de l'excroissance (9) par l'intermédiaire d'un pion (14) localisé dans le moule (4) ou lors du décarottage, provoquant une différence de hauteur (h) avec une autre partie (b) de la zone limitrophe de l'excroissance (9).

6. Procédé selon l'une des revendications 1 à 3, **caractérisé en ce que** la troisième opération d'initiation de la délamination s'effectue par déformation d'une partie (c) de la zone entourant l'excroissance (9) par l'intermédiaire d'une première canne de soufflage (15) tendant à écarter les deux parois (2, 3) en soufflant de l'air sous pression s'infiltrant entre le boîtier externe (2) et la poche souple interne (3).

7. Procédé selon la revendication 6, **caractérisé en ce que**, successivement à la troisième opération d'initiation de la délamination, une seconde canne de soufflage vient, au niveau d'un embout supérieur du récipient (1) adapté à recevoir l'organe de prélèvement, souffler de l'air sous pression pour vérifier l'étanchéité de la poche souple interne (3) et permettre de venir la replaquer contre le boîtier externe (2) pour qu'elle reprenne sa forme et sa contenance initiales.

8. Procédé selon l'une des revendications 1 à 7, **caractérisé en ce que** l'excroissance (9) est réalisée dans la partie basse du récipient (1).

9. Procédé selon l'une des revendications 1 à 8, **caractérisé en ce que**, de manière à améliorer le délaminage, des agents sont ajoutés dans au moins l'une des deux matières constitutives du récipient (1).

10. Procédé selon l'une des revendications 1 à 9, **caractérisé en ce que** le moule (4), constitué de deux demi-coques (4A, 4B), comporte dans son plan de joint des extensions longitudinales (11) réalisées sur une hauteur prédéterminée, de manière à permettre un pincement de la couche interne souple (3) dans la couche externe rigide (2), empêchant la délamination de la première par rapport à la seconde dans cette zone et contraindre ainsi, lors de l'usage du récipient (1), une délamination de la poche souple (3) par rapport au boîtier rigide (2) dans un sens perpendiculaire audit plan de joint.

11. Procédé selon l'une des revendications 1 à 10, **caractérisé en ce que** la paraison (5) comporte au moins une nervure (12) réalisée longitudinalement sur la périphérie interne de la poche souple (3), de manière à faciliter la vidange de celle-ci en la contraignant à se rétracter autour d'un axe central correspondant à celui de l'organe de prélèvement et conséquemment à se collapser suivant des zones de pliures préférentielles et faciliter ainsi le vidage de la poche (3) en utilisation.

12. Procédé selon l'une des revendications 1 à 11, **caractérisé en ce que** le fond du moule (4) est bombé vers l'extérieur et comprend au moins deux appendices diamétralement opposés destinés à former des plots d'appui (13) du récipient (1), en vue d'assurer la stabilité de celui-ci, malgré son fond bombé.

13. Procédé selon l'une des revendications 1 à 12, **caractérisé en ce que** la matière constitutive du boîtier rigide externe (2) est rendue poreuse par l'intermédiaire de charges ou d'additifs ajoutés à la matière, de manière à améliorer la continuation de la délamination sur les parois du récipient (1) en permettant à l'air extérieur de s'insérer plus facilement entre ses deux couches (2, 3) le constituant.

## Claims

1. Method of producing an air vent in a multiwall container (1), of the type consisting of a rigid external casing (2) inside which is disposed a flexible sachet (3) intended to contain a product and connected to a dispensing member with no air vent, such a container (1) being obtained in a mould (4) by blow moulding a co-extruded preform (5) formed of an external main layer in relatively rigid plastic material intended to constitute the casing (2) and an internal secondary layer in relatively flexible plastic material intended to constitute the sachet (3), said layers (2, 3) not adhering to each other so as to be peeled apart without difficulty, after creation of a stalk (6) in a portion of the preform (5) during the coextrusion/blow moulding operation, followed by elimination of the stalk (6) formed in this way and, finally, creation of an air vent (7) between the flexible layer (3) and the rigid layer (2) of the preform (5), the air vent (7) being obtained by providing in the mould (4), in at least one area of pinching of the preform (5), a reserve (8) intended to produce an protuberance (9) on said preform (5), the height of the latter being such as to enable at its end a first cutting operation at the level of the stalk (6) having the unwanted effect of welding by crushing the two walls of the external layer (2) to the two walls of the internal layer (3) in this area, a second operation of cutting off the protuberance (9) by means of a cutting tool (10), after opening the mould (4) and reworking the container (1) using reworking masks, and a third operation successive to or simultaneous with the second consisting in peeling apart the layers (2, 3) by mechanical means, **characterised in that** the peeling apart to produce the air vent is obtained entirely by exerting an axial force (F) on the protuberance (9) or in an area close thereto.

2. Method according to claim 1, **characterised in that** the first cutting operation is effected by cutters (8) integral with the mould (4).

3. Method according to either of claims 1 or 2, **characterised in that** the second cutting operation is effected by an automated or automatable cutting tool consisting of pincers (10).

4. Method according to any of claims 1 to 3, **characterised in that** the third operation of initiating peeling apart is effected by means of an automated or automatable cutting tool consisting of pincers (10) by pinching the protuberance (9), pulling it in the axial direction and then performing the second cutting operation.

5. Method according to any of claims 1 to 3, **characterised in that** the third operation of initiating peeling apart is effected by deformation of a portion (a) of the border area of the protuberance (9) by means of a pin (14) located in the mould (4) or during stalk removal, causing a height difference (h) with another part (b) of the border area of the protuberance (9).

6. Method according to any of claims 1 to 3, **characterised in that** the third operation of initiating peeling apart is effected by deformation of a portion (c) of the area around the protuberance (9) by means of a first blower nozzle (15) to separate the two walls (2, 3) by blowing air under pressure infiltrating between the external casing (2) and the internal flexible sachet (3).

7. Method according to claim 6, **characterised in that**, after the third operation of initiating peeling apart, a second blower nozzle at an upper end of the container (1) adapted to receive the dispensing member blows air under pressure to verify the seal of the internal flexible sachet (3) and to press it against the external casing (2) again so that it resumes its initial shape and its initial capacity.

8. Method according to any of claims 1 to 7, **characterised in that** the protuberance (9) is produced in the lower portion of the container (1).

9. Method according to any of claims 1 to 8, **characterised in that**, to improve peeling apart, agents are added to at least one of the two materials constituting the container (1).

10. Method according to any of claims 1 to 9, **characterised in that** the mould (4), consisting of two half-shells (4A, 4B), includes in its joint plane longitudinal extensions (11) produced over a predetermined height to enable pinching of the flexible internal layer (3) inside the rigid external layer (2), preventing peeling apart of the first relative to the second in this area and thus, during use of the container (1), constraining peeling apart of the flexible pocket (3) and the rigid casing (2) in a direction perpendicular to said joint plane.

11. Method according to any of claims 1 to 10, **characterised in that** the preform (5) includes at least one rib (12) produced longitudinally on the internal periphery of the flexible sachet (3) to facilitate emptying thereof by constraining it to shrink around a central axis corresponding to that of the dispensing member and consequently to collapse in preferential folding areas and thus to facilitate emptying of the sachet (3) in use.

12. Method according to any of claims 1 to 11, **characterised in that** the bottom of the mould (4) is domed outwards and comprises at least two diametrally opposite appendices intended to form bearing areas (13) on the container (1) to ensure the stability thereof despite its domed bottom.

13. Method according to any of claims 1 to 12, **characterised in that** the material constituting the external rigid casing (2) is rendered porous by means of charges or additives added to the material to improve the continuation of the peeling apart of the walls of the container (1) by allowing external air to infiltrate more easily between the two layers (2, 3) constituting it.

## Patentansprüche

1. Verfahren zum Bereitstellen einer Lüftungsöffnung in einem mehrwandigen Behälter (1) des Typs, der aus einem steifen, äußeren Gehäuse (2) gebildet ist, in dessen Inneren eine flexible Tasche (3) zum Halten eines Produktes angeordnet ist, die in Verbindung zu einer Entnahmevorrichtung ohne Lüftungsöffnung steht, wobei ein solcher Behälter (1) in einer Form (4) durch Koextrusionsblasen eines Vorformlings (5) erzielt wird, welcher aus einer äußeren Hauptschicht aus einem relativ starren Kunststoffmaterial zum Bilden des Gehäuses (2) und aus einer inneren Sekundärschicht aus einem relativ flexiblen Kunststoffmaterial zum Bilden der Tasche (3) gestaltet ist, wobei die beiden Schichten (2, 3) keinerlei Haftung zwischen einander aufweisen, so dass sie sich ohne Schwierigkeit nach Bildung eines Angusszapfens (6) an einem Teil des Vorformlings (5) während des Koextrusionsblasens, der anschließenden Beseitigung des so geformten Angusszapfens (6) und schließlich der Schaffung einer Lüftungsöffnung (7) zwischen der flexiblen Schicht (3) und der starren Schicht (2) des Vorformlings (5) delaminieren lassen, wobei die Lüftungsöffnung (7) durch Einrichten einer Aussparung (8) in der Form (4) in mindestens einem Klemmbereich des Vorformlings (5) erzielt wird, welche Aussparung zum Erzielen eines Vorsprungs (9) des Vorformlings (5) dient, dessen Höhe so bemessen ist, dass auf dem Niveau dessen Endes ein erster Arbeitsgang des Abscherens auf dem Niveau des Angusszapfens (6) mit der unheilvollen Wirkung, die beiden Wände der äußeren Schicht (3) mit den beiden Wänden der inneren Schicht (2) durch Quetschung zu verschweißen, ein zweiter Arbeitsgang des Zuschneidens des Vorsprungs (9) mittels eines Schneidwerkzeuges (10) nach Öffnung der Form (4) und Entnahme des Behälters (1) durch Entnahmemasken und ein dritter Arbeitsgang nach oder gleichzeitig mit dem zweiten möglich ist, der darin besteht, die Schichten von einander durch ein mechanisches Mittel (2, 3) zu delaminieren, **dadurch gekennzeichnet, dass** die Delaminierung zur Herstellung der Lüftungsöffnung ausschließlich durch Ausübung einer Axialkraft (F) auf den Vorsprung (9) oder auf einen in dessen Nähe gelegenen Bereich erzielt wird.

2. Verfahren nach Anspruch 1, **dadurch gekennzeichnet, dass** der erste Arbeitsgang des Abscherens durch in die Form (4) integrierte Messer (8) ausgeführt wird.

3. Verfahren nach einem der Ansprüche 1 oder 2, **dadurch gekennzeichnet, dass** der zweite Arbeitsgang des Zuschneidens durch ein automatisches oder automatisierbares, aus einer Zange (10) bestehendes Schneidwerkzeug ausgeführt wird.

4. Verfahren nach einem der Ansprüche 1 bis 3, **dadurch gekennzeichnet, dass** der dritte Arbeitsgang der Initiierung des Delaminierens durch Fassen des Vorsprungs (9) mit einem automatischen oder automatisierbaren, aus einer Zange (10) gebildeten Werkzeug durch Ziehen des Vorsprungs in Axialrichtung und durch anschließende Ausführung des zweiten Arbeitsgangs des Zuschneidens durchgeführt wird.

5. Verfahren nach einem der Ansprüche 1 bis 3, **dadurch gekennzeichnet, dass** der dritte Arbeitsgang der Initiierung des Delaminierens durch Verformung eines Teils (a) des an den Vorsprung (9) angrenzenden Bereiches mittels eines in der Form (4) befindlichen Stückes (14) oder beim Entfernen des Angusszapfen durchgeführt wird, wodurch ein Höhenunterschied (h) zu einem anderen Teil (b) des an den Vorsprung (9) angrenzenden Bereiches hervorgerufen wird.

6. Verfahren nach einem der Ansprüche 1 bis 3, **dadurch gekennzeichnet, dass** der dritte Arbeitsgang der Initiierung des Delaminierens durch Deformierung eines Teils (c) des den Vorsprung (9) umgebenden Bereiches durch ein erstes Gebläserohr (15) durchgeführt wird, was durch Blasen von Pressluft, die zwischen das äußere Gehäuse (2) und die biegsame, innere Tasche (3) eindringt, die beiden Wände (2, 3) auseinandertreibt

7. Verfahren nach Anspruch 6, **dadurch gekennzeichnet, dass** im Anschluss an den dritten Arbeitsgang der Initiierung des Delaminierens ein zweites Gebläserohr auf dem Niveau eines oberen, zur Aufnahme der Entnahmevorrichtung vorgesehenen Ansatzstückes des Behälters (1) Druckluft einbläst, um die Dichtheit der flexiblen inneren Tasche (3) zu überprüfen und es ihr zu ermöglichen, sich wieder gegen das äußere Gehäuse (2) anzulegen, damit sie ihre ursprüngliche Form und ihr ursprüngliches Fassungsvermögen wiedererlangt.

8. Verfahren nach einem der Ansprüche 1 bis 7, **dadurch gekennzeichnet, dass** der Vorsprung in dem unteren Abschnitt des Behälters gebildet ist.

9. Verfahren nach einem der Ansprüche 1 bis 8, **dadurch gekennzeichnet, dass** zur Verbesserung des Delaminierens zu mindestens einem der beiden den Behälter (1) bildenden Materialien Mittel beigefügt sind.

10. Verfahren nach einem der Ansprüche 1 bis 9, **dadurch gekennzeichnet, dass** die aus zwei Halbschalen (4a, 4b) gebildete Form (4) in ihrer Verbindungsebene langgestreckte Fortsätze (11) umfasst, die auf einer vorbestimmten Höhe derart ausgebildet sind, dass ein Einklemmen der inneren flexiblen Schicht (3) in der äußeren starren Schicht (2) ermöglicht ist, wodurch die Delaminierung der ersten Schicht in Bezug auf die zweite in diesem Bereich verhindert wird, und somit bei Benutzung des Behälters (1) eine Delaminierung der flexiblen Tasche (3) in Bezug auf das starre Gehäuse (2) in einer Vertikalrichtung zur Verbindungsebene erzwungen wird.

11. Verfahren nach einem der Ansprüche 1 bis 10, **dadurch gekennzeichnet, dass** der Vorformling (5) mindestens eine Rippe (12) umfasst, die in Längsrichtung auf dem Innenumfang der flexiblen Tasche (3) ausgeführt ist, sodass sie deren Entleeren erleichtert **dadurch** dass sie deren Verengung um eine zentrale Achse, die derjenigen der Entnahmevorrichtung entspricht, und damit deren Zusammenfallen entlang vorgegebener Faltzonen erzwingt und **dadurch** das Entleeren der Tasche (3) bei Gebrauch erleichtert.

12. Verfahren nach einem der Ansprüche 1 bis 12, **dadurch gekennzeichnet, dass** der Boden der Form (4) nach außen gewölbt ist und mindestens zwei gegenüberliegende Ansatzstücke umfasst, um Abstützpunkte (13) des Behälters (1) im Hinblick auf ein Sicherstellen von dessen Stabilität trotz dessen gewölbten Bodens zu bilden.

13. Verfahren nach einem der Ansprüche 1 bis 12, **dadurch gekennzeichnet, dass** dem das starre äußere Gehäuse (2) bildenden Material über Ladungen oder dem Material beigefügte Zusätze Porösität verliehen wird, sodass die Kontinuität des Abschälens der Behälterwand **dadurch** verbessert wird, dass es der Außenluft ermöglicht wird, leichter zwischen die beiden den Behälter (1) bildenden Schichten (2, 3) zu gelangen.
